# EUROPÄISCHE PATENTSCHRIFT

(11) **EP 2 238 824 B1**
(45) Veröffentlichungstag und Bekanntmachung des Hinweises auf die Patenterteilung: **24.10.2012**
(21) Anmeldenummer: 10000750.9
(22) Anmeldetag: 26.01.2010
(51) Int. Cl.: A01F 12/20

(54) **Dreschtrommel für Mähdrescher**
Threshing drum for a combine harvester
Tambour batteur pour moissonneuse-batteuse

(30) Priorität: 01.04.2009 DE 102009015235
(43) Veröffentlichungstag der Anmeldung: 13.10.2010
(73) Patentinhaber: CLAAS Selbstfahrende Erntemaschinen GmbH, 33428 Harsewinkel (DE)
(72) Erfinder: Esken, Dirk, 59494 Soest-Meckingsen (DE); Schwersmann, Berthold, 49186 Bad Iburg (DE); Buddenkott, Franz, 33428 Harsewinkel (DE); Krieft, Manfred, 33428 Harsewinkel (DE); Bußman, Ralf, 48336 Sassenberg (DE)

(56) Entgegenhaltungen:
- EP-A1- 0 516 893
- DE-A1- 2 233 018
- DE-A1-102005 014 329
- US-A- 3 092 115
- US-A- 5 624 314

## Beschreibung

Die Erfindung bezieht sich auf eine Dreschtrommel für Mähdrescher in geschlossener Bauweise, bei der auf der Umfangsfläche eines zylinderförmigen Trommelkörpers Tragprofile angebracht sind, an denen die Schlagleisten befestigt sind, nach dem Oberbegriff des Patentanspruches 1.

Um den möglichen Einsatzumfang von Mähdreschern zu erhöhen, ist es bereits bekannt, die Dreschtrommeln so umzurüsten und mit verschiedenen Zusatzeinrichtungen zu versehen, dass eine Vielzahl von Dreschgutarten geerntet werden können.

Beim Drusch von Körnermais und einigen Sonderkulturen werden beispielsweise im Umfangsbereich der Dreschtrommel die freien Zwischenräume zwischen benachbarten Schlagleisten mit profilierten oder ebenen Abdeckblechen versehen, um das Eindringen von Erntegut in den offenen Innenraum der Dreschtrommel, insbesondere bei niedrigen Drehzahlen zu vermeiden.

Hierfür sind bereits verschiedenartige Ausführungen und Anordnungen bekannt. In der US 3 856 022 ist eine Dreschtrommel mit zwischen den Schlagleisten angeordneten ebenen Abdeckblechen, die an den einzelnen Trommelböden angeschraubt sind.

Die DE 31 23 992 A1 zeigt verstellbare Abdeckbleche, die die freien Zwischenräume benachbarter Schlagleisten überbrücken. Die Abdeckbleche sind außerdem an den oberen Seiten mit Reibleisten versehen, die auf den Hüllkreis der Dreschtrommel gerichtet sind. Die jeweilige Lage der Abdeckbleche ist entsprechend dem Erntegut über eine Verstelleinrichtung einstellbar. Obwohl mit diesen bekannten Ausführungen die volle Funktionsweise gewährleistet ist, sind sie jedoch immer nur für einen speziellen Einsatzfall und nicht für eine universelle Anwendung geeignet.

Des Weiteren ist aus der US 4 796 645 eine Dreschtrommel mit einer durchgehenden Trommelwelle und einem geschlossenen zylindrischen Trommelkörper bekannt, an dessen Umfang Halterungen und gewölbte Abdeckbleche angeordnet sind, an denen die Schlagleisten befestigt sind. Der Schlagleistenwinkel an der Innenseite beträgt hierbei etwa 120°. Die Anlauffläche der Abdeckbleche weist gegenüber der Umfangsfläche des Trommelkörpers einen Zuführungswinkel von ca. 60° für das Erntegut auf. Da das Erntegut dadurch in einem steilen Winkel zu den Schlagleisten geleitet wird, tritt neben einer ungleichförmigen Erntegutzuführung auch eine erhöhte Körnerbeschädigung auf. Weiterhin wirkt es sich nachteilig aus, dass der Trommelkörper die beim Dreschvorgang auftretenden Kräfte punktuell aufnehmen muss, wodurch eine entsprechend große Dimensionierung des Trommelkörpers erforderlich ist. Aufgrund des geringen Schlagleistenwinkel von ca. 120° ist keine sichere Auflage der Schlagleisten auf den Abdeckblechen möglich. Dadurch können sich unterhalb der Schlagleisten Erntegutbestandteile und Staubansammlungen ablagern, die bei den hohen Dreschtrommeldrehzahlen Unwuchterscheinungen verursachen und zu einem vorzeitigen Verschleiß der Trommelwellenlager führen.

Die DE 10 2005 014 329 A1 und die DE 22 33 018 A1 beschreiben jeweils eine Dreschtrommel der eingangs genannten Art, auf der die Schlagleisten auf dem sich in Umfangsrichtung erstreckenden Abschnitt der Tragprofile angeordnet. Zur Befestigung der Schlagleisten werden diese durch die Schlagleisten senkrecht durchdringende Schraubverbindungen befestigt. Die Anordnung der Schlagleisten auf der Umfangsfläche der Tragprofile führt zu den zuvor beschriebenen Nachteilen.

Der Erfindung liegt die Aufgabe zugrunde, durch eine vorteilhafte Ausführung der Dreschtrommel eine universelle Einsetzbarkeit für verschiedene Erntegutarten zu erreichen, ohne dass kostenaufwendige Zusatz- und Umrüstarbeiten durchgeführt werden müssen.

Diese Aufgabe wird durch die im Patentanspruch 1 genannten kennzeichnenden Merkmale gelöst. Weitere vorteilhafte Ausführungen des Erfindungsgegenstandes ergeben sich aus den nachgeordneten Ansprüchen.

Durch die erfindungsgemäße Lösung wird mit einem geringen Kostenaufwand eine universell einsetzbare Dreschtrommel für Mähdrescher geschaffen. Aufgrund der vorteilhaften Ausführung sind die U-förmigen Tragprofile bei geringen Wandstärken und einer großen Anlauffläche sowohl bei der Ernte von verschiedenen Getreidearten und Sonderkulturen als auch in der Körnermaisernte einsetzbar, ohne dass spezielle Ausrüstungsvarianten oder aufwendige Umrüstungen erforderlich sind. Infolge der mit einem flachen Zuführungswinkel ausgestalteten Anlauffläche ergibt sich eine günstige Gestalt der Tragprofile wodurch eine einfache und sichere Befestigung für die Schlagleisten sowie eine wesentliche Reduzierung des Körnerbruches möglich wird. Durch die vorteilhafte Ausgestaltung des Befestigungs- und Schlagleistenwinkels, wird eine Montagevorspannung erzeugt, die eine vollflächige Anlage der Schlagleisten an den Anlauf- und Tragflächen der Tragprofile sicher stellt. Hierdurch wird ein Ausgleich von Fertigungstoleranzen erzielt und eine Ansammlung von Staub und Erntegutbestandtellen unterhalb der Schlagleisten und damit Trommelunwuchten vermieden. Die an der Umfangsfläche der zylindrischen Trommelkörpers über dessen gesamte Breite angeordneten Tragprofile mit einer besonders widerstandsfähigen Querschnittsgestaltung mit den daran befestigten Schlagleisten verleihen der Dreschtrommel eine hohe Stabilität, sodass keine durchgängige Trommelwelle notwendig ist, wodurch sich geringere Herstellungskosten ergeben. Die auf die Schlagleisten im Druschvorgang wirkenden Kräfte werden von den Tragprofilen und insbesondere von den Tragflächen vollflächig aufgenommen und insbesondere über die Stützflächen auf die gesamte Breite des Trommelkörpers übertragen wodurch sich vorteilhaft geringe Wandstärken ergeben. Die Stabilität der Dreschtrommel wird durch Verstrebungen zwischen der Anlauffläche und der Stützfläche innerhalb der Tragprofile weiter erhöht, wobei vorteilhaft diese Verstrebungen in den Bereichen der Trommelböden angeordnet sind.
Indem das Durchmesserverhältnis zwischen dem Trommelkörper und dem Hüllkreis der Dreschtrommel etwa 1:1,25 beträgt, wird ein Optimum zwischen Dresch- und Fördereigenschaft sowie der Stabilität der Dreschtrommel erzielt.

Die erfindungsgemäße Dreschtrommel findet in einem Mähdrescher ihre bestimmungsgemäße Verwendung, vorteilhaft in Verbindung mit einer Vorbeschleunigertrommel. Die Vorbeschleunigertrommei führt das Erntegut mit hoher Geschwindigkeit der Dreschtrommel zu, wodurch die Erntegutannahme der erfindungsgemäßen Dreschtrommel verbessert und schon im Einlaufbereich der Dreschtrommel eine hohe Abscheidung von Körnern erreicht wird.

Die Erfindung wird nachstehend an einem Ausführungsbeispiel näher erläutert.

### In der zugehörigen Zeichnung zeigen

- Fig.: 1: eine schematische Längsschnittdarstellung eines Mähdreschers,
- Fig.: 2: eine perspektivische (ISO-) Darstellung der Dreschtrommel,
- Fig.: 3: eine Seitenansicht der Dreschtrommel,
- Fig.: 4: eine Verbindungsstelle zwischen einem Tragprofil und einer Schlagleiste vor der Befestigung einer Schlagleiste,
- Fig.: 5: die Draufsicht auf die Dreschtrommel,
- Fig.: 6: einen Längsschnitt durch die Dreschtrommel.

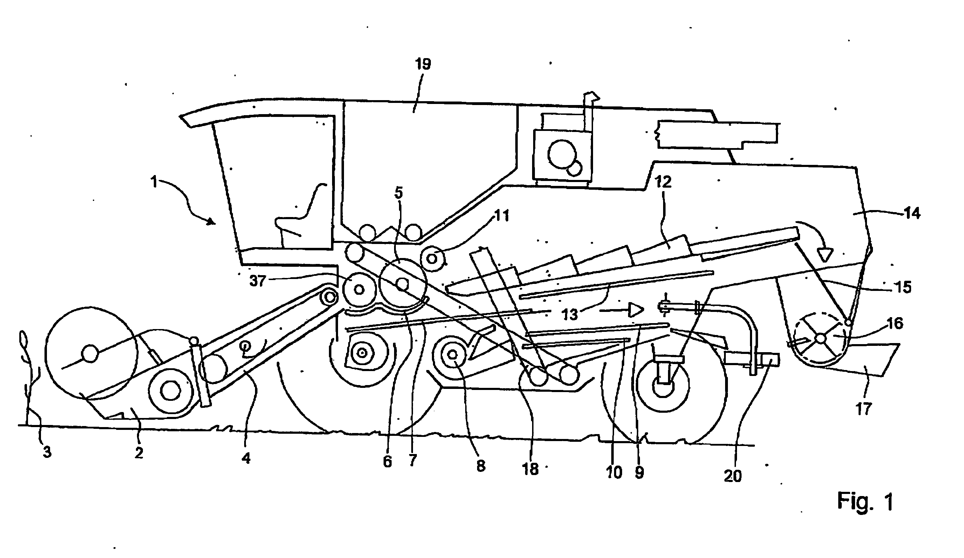

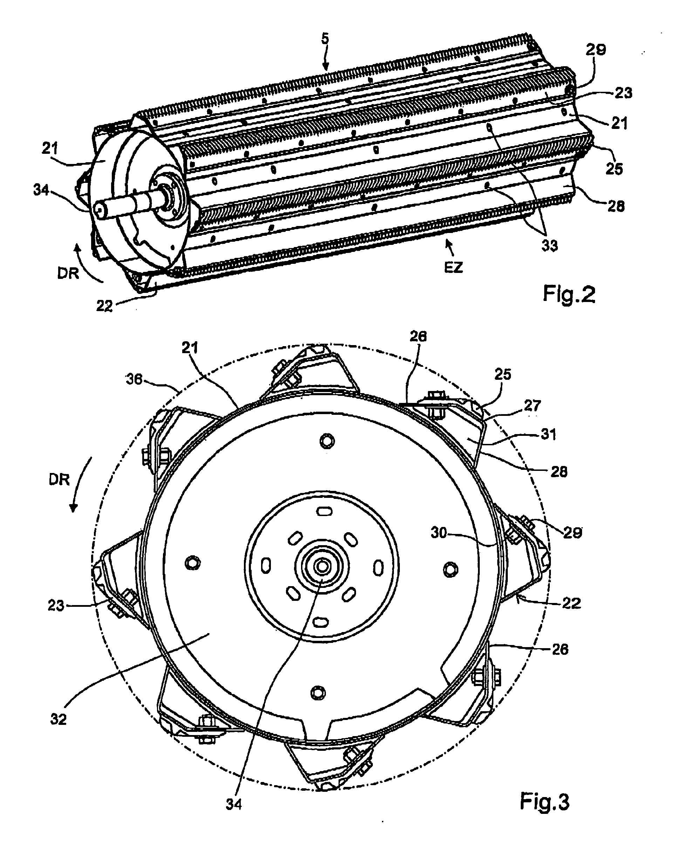

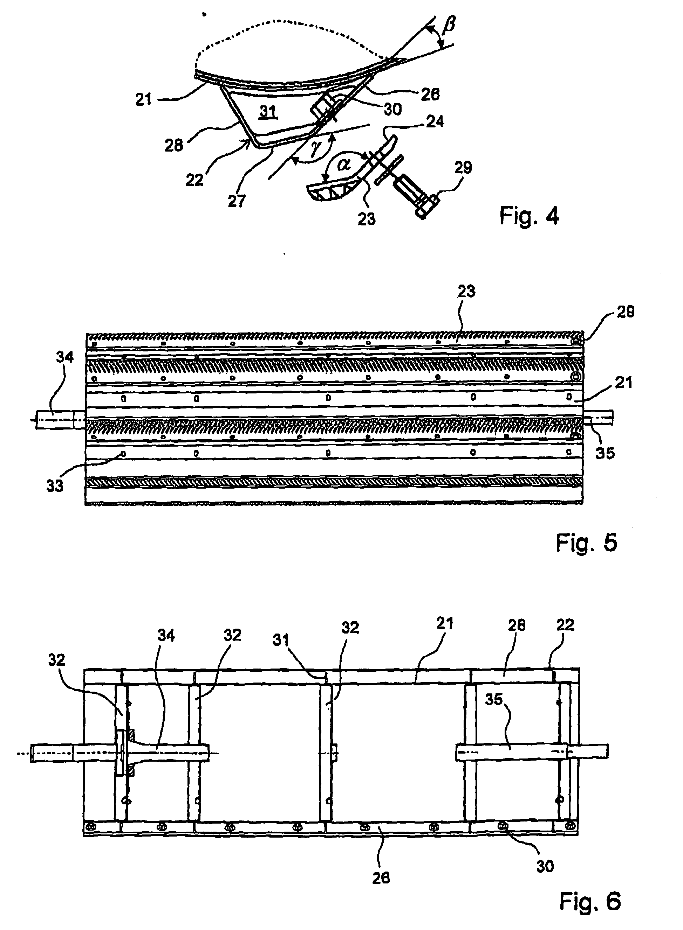

Bei dem in der Flg. 1 dargestellten selbstfahrenden Mähdrescher 1 gelangt das vom Schneidwerk 2 abgeschnittene Erntegut 3 über einen schräg nach oben verlaufenden Einzugskanal 4 zu einer nach dem Tangentialprinzip arbeitenden Drescheinrichtung.
Diese besteht aus einer Vorbeschleunigertrommel 37, einer Dreschtrommel 5 und aus einem zugeordneten Dreschkorb 6. Zwischen der umlaufenden Vorbeschleunigertrommel 37, der Dreschtrommel 5 und dem feststehenden Dreschkorb 6 erfolgt der Ausdrusch der in den Fruchtständen des Erntegutes 3 befindlichen Körner. Die Vorbeschleunigertrommel 37 nimmt das Erntegut 3 vom Einzugkanal ab, beschleunigt dieses und führt es der Dreschtrommel 5 zu. Die am Dreschkorb 6 abgeschiedenen Körner gelangen gemeinsam mit dem Kurzstroh und der Spreu über einen Förderboden 7 zu einer Reinigungseinrichtung, die aus einem Gebläse 8 und aus einem Ober- und Untersieb 9, 10 besteht. Die den Dreschkorb 6 in tangentialer Richtung verlassenden Erntegutbestandteile werden über eine parallel zur Dreschtrommel 5 angeordnete rotierende Wendetrommel 11 zu den Strohschüttlern 12 gefördert. Die auf den Strohschüttlern 12 abgeschiedenen Körner sowie Kurzstrohteile und Spreu werden über einen unterhalb der Strohschüttler 12 angeordneten Rücklaufboden 13 der Reinigungseinrlchtung zugeführt. Die längeren Strohteile werden über die Schüttlerbeläge hinweg In Richtung zum Strohauslauf 14 gefördert und darf aus wahlweise über eine schwenkbare Klappe 15 entweder auf den Feldboden im Schwad abgelegt oder von einem Strohhäcksler 16 zerkleinert und anschließend gleichmäßig durch eine Verteilvorrichtung 17 auf dem Feld verteilt. Die in der Relnigungseinrichtung abgeschiedenen und gereinigten Körner werden über einen hier nur teilweise dargestellten Elevator 18 in den Korntank 19 gefördert. Die Kurzstrohteile und die Spreu werden durch den Druckluftstrom des Gebläses 8 aus dem Mähdrescher 1 auf den Feldboden geleitet bzw. durch einen Spreuverteiler 20 auf dem Feld verteilt.
Im Folgenden wird der Aufbau der Dreschtrommel 5 mit den wichtigsten Bauteilen anhand der Fig. 2 bis 6 beschrieben. Auf einem drehbar angetriebenen zylinderförmigen Trommelkörper 21 sind auf dessen Umfangsfläche mehrere mit Abstand zueinander angeordnete U-förmige Tagprofile 22 befestigt, die sich über die gesamte Breite des Trommelkörpers 21 erstrecken. Die feste Verbindung der Tragprofile 22 mit dem Trommelkörper 21 erfolgt beispielsweise durch eine Schweißverbindung. An den Tragprofilen 22 sind die für den Dreschvorgang erforderlichen Schlagleisten 23 befestigt. Die Schlagleisten 23 sind als Winkelschlagleisten ausgebildet. Sie sind mit einer ebenen abgewinkelten Befestigungsfläche 24 sowie auf ihrer oberen Seite mit schräg zur Drehrichtung DR der Dreschtrommel 5 verlaufenden Rippen 25 versehen. Der Schlagleistenwinkel α an der Unterseite beträgt etwa 146° im Ausgangszustand vor der Befestigung. Die Tragprofile 22 weisen einen unsymmetrischen Querschnitt mit allseitig ebenen und schräg zum Umfang des Trommelkörpers 21 verlaufenden unterschiedlich großen Einzelflächen 26, 27, 28 auf, wobei die Anlauffläche 26 größer als die Tagfläche 27 beziehungsweise die Stützfläche 28 ist. An der Anlauffläche 26 sind die Schlagleisten 23 mittels Schraubverbindungen 29 lösbar befestigt und liegen, wie nachfolgend näher erläutert, unter Vorspannung auf der Tragfläche 27 auf. Die zugehörigen, an der Innenseite der Anlauffläche 26 befestigten Muttern 30 werden vor dem Verbinden der Tragprofile 22 mit dem Trommelkörper 21 vorzugsweise durch Punktschweißen angebracht. Die Anlauffläche 26 der Tragprofile 22 weist gegenüber der Umfangsfläche des Trommelkörpers 21 einen flachen Zuführungswinkel β für die Erntegutzuführung EZ von vorzugsweise 15° bis 45° auf. Durch diese Ausführung der Tragprofile 22 ergibt sich in Verbindung mit den aufgeschraubten Schlagleisten 23 eine kompakte und widerstandsfähige Form. Besonders vorteilhaft wirkt sich hierbei die große, durch den flachen Zuführungswinkel β bedingte, Abmessung des Verbindungsbereiches mit dem Trommelkörper 21 in Umfangsrichtung aus. Die Erntegutzuführung EZ zu den Schlagleisten 23 in einem flachen Zuführungswinkel β sowie die geschlossene Trommelbauweise verringern wesentlich den Bruchkornantell und steigern dadurch den Wert und die Qualität der Körner.
An den Tragprofilen 22 beträgt der Befestigungswinkel γ für die Schlagleisten 23 etwa 148° und ist damit größer als der Schlagleistenwinkel α vor der Montage der Schlagleisten 23 im Ausgangszustand. Bei der Befestigung der Schlagleisten 23 an den Anlaufflächen 26 der Tragprofile 22 mittels mehrerer Schraubverbindungen 29 entsteht durch die unterschiedlich großen Schlagleistenwinkel α und Befestigungswinkel γ zwischen den Tragprofilen 22 und den nach innen gerichteten Befestigungsflächen 24 der Schlagleisten 23 unter der Wirkung einer Montagevorspannung eine vollflächige und formschlüssige Anlage und damit eine sichere Befestigung der Schlagleisten 23. Zur weiteren Stabilisierung sind im innerhalb der Tragprofile 22 längs- und querstabilislerende Verstrebungen 31 zwischen der Anlauffläche 26 und der Stützfläche 28 in Drehrichtung DR der Dreschtrommel 5 angeordnet. Die im Innenraum des Trommelkörpers 21 angeordneten Trommelböden 32 sind an ihrem Umfangsbereich durch punktuelle drehfeste Verbindungsstellen 33 beisplelsweise Schweißverbindungen, mit dem Trommelkörper 21 verbunden. Die Verbindungsstellen 33 sind dabei mit Abstand zwischen zwei benachbarten Tragprofilen 22 angeordnet. Die jeweils beiden randseitigen Trommelböden 32 sind drehfest mit Weilenstummein 34, 35 verbunden, deren äußere freie Enden mit den Wellenlagern und Antriebseinrichtung für die Dreschtrommel 5 in Verbindung stehen. Aufgrund der hohen Stabilität im Umfangsbereich des Trommelkörpers 21 ist eine durchgängige Trommelwelle nicht erforderlich.

Bei einem für den Dreschvorgang vorteilhaften Durchmesser des Trommelkörpers 21 von 480mm und dem Durchmesser des Hüllkreises 36 der Dreschtrommel 5 von 600mm ergibt sich ein optimales Verhältnis von 1 zu 1,25. Das hlerdurch zwischen zwei aufeinanderfolgende Schlagleisten einbringbare Erntegutvolumen, stellt in Verbindung mit dem erfindungsgemäßen Durchmesserverhältnis und dem optimalen Zuführungswinkel β zwischen 22°- 23° eine hohe Druschleistung sicher.

### Bezugszeichenliste:

- 1: Mähdrescher
- 2: Schneidwerk
- 3: Erntegut
- 4: Einzugskanal
- 5: Dreschtrommel
- 6: Dreschkorb
- 7: Förderboden
- 8: Gebläse
- 9: Obersieb
- 10: Untersieb
- 11: Wendetrommel
- 12: Strohschüttler
- 13: Rücklaufboden
- 14: Strohausiauf
- 15: Klappe
- 16: Strohhäcksler
- 17: Verteilvorrichtung
- 18: Elevator
- 19: Korntank
- 20: Spreuverteiler
- 21: Trommelkörper
- 22: Tragprofile
- 23: Schlagleisten
- 24: Befiestigungsfläche
- 25: Rippen
- 26: Anlauffläche
- 27: Tragfläche
- 28: Stützfläche

- 29: Schraubverbindung
- 30: Muttern
- 31: Verstrebungen
- 32: Trommelböden
- 33: Verbindungsstellen
- 34,35: Wellenstummel
- 36: Hüllkreis
- 37: Vorbeschleunigertrommei
- DR: Drehrichtung
- EZ: Erntegutzuführung
- α: Schlagleistenwinkel
- β: Zuführungswinkel
- γ: Befestigungswinkel

## Patentansprüche

1. Dreschtrommel (5) für Mähdrescher in geschlossener Bauweise, bei der auf der Umfangsfläche eines drehbar angetriebenen zylinderförmigen Trommelkörpers (21) über dessen gesamte Breite mehrere mit Abstand zueinander angeordnete Tragprofile (22) angebracht sind, an denen die Schlagleisten (23) lösbar befestigt sind, und die Tragprofile (22) U-förmig mit allseitig ebenen Flächen (26, 27, 28) ausgebildet sind
**dadurch gekennzeichnet,**
**dass** der Winkel (γ) an den Tragprofilen (22) zur Befestigung der Schlagleisten (23) größer ist als der Winkel (α) an der Unterseite der eine abgewinkelte Befestigungsfläche (24) sufweisenden Schlagleisten (23) vor der Montage der Schlagleisten (23) im Ausgangszustand.

2. Dreschtrommel nach Anspruch 1, **dadurch gekennzeichnet, dass** die Tragprofile (22) einen unsymmetrischen Querschnitt aufweisen und die Anlauffläche (26) größer als die anderen Einzelflächen (27, 28) ist.

3. Dreschtrommel nach den Ansprüchen 1 oder 2, **dadurch gekennzeichnet, dass** die Anlauffläche (26) der Tragprofile (22) gegenüber der Umfangsfläche des Trommelkörpers (21) einen flachen Zuführungswinkel (β) von etwa 15° bis 45° aufweisen.

4. Dreschtrommel nach Anspruch 3, **dadurch gekennzeichnet, dass** der Zuführungswinkel (β) im Bereich von 22° bis 23° liegt.

5. Dreschtrommel nach wenigstens einem der Ansprüche 1 bis 4, **dadurch gekennzeichnet, dass** die Schlagleisten (23) mittels mehrerer Schraubverbindungen (29) an den Anlaufflächen (26) der Tragprofile (22) so befestigt sind, dass die gesamten nach innen gerichteten Befestigungsflächen (24) der Schlagleisten (23) unter der Wirkung einer Montagevorspannung vollflächig und formschlüssig an den Tragprofilen (22) anliegen.

6. Dreschtrommel nach wenigstens einem der Ansprüche 1 bis 5, **dadurch gekennzeichnet, dass** die im Innraum des Trommelkörpers (21) angeordneten Trommelböden (32) im Umfangsbereich mir dem Trommelkörper (21) über punktuelle Verbindungsstellen (33) verbunden sind und dass die jeweils beiden randseitigen Trommelböden (32) drehfest mit Wellenstummein (34, 35) verbunden sind, deren äußere freie Enden mit den Wellenlagern und der Antriebseinrichtung für die Dreschtrommel (5) in Verbindung stehen.

7. Dreschtrommel nach wenigstens einem der Ansprüchen 1 bis 6, **dadurch gekennzeichnet, dass** innerhalb der Tragprofile Verstrebungen (31) zwischen der Anlauffläche (26) und der Stützfläche (28) angeordnet sind.

8. Dreschtrommel nach wenigstens einem der Ansprüchen 1 bis 7, **dadurch gekennzeichnet, dass** die Verstrebungen (31) in den Bereichen der Trommelböden (32) angeordnet sind.

9. Dreschtrommel nach wenigstens einem der Ansprüche 1 bis 8, **dadurch gekennzeichnet, dass** das Durchmesserverhältnis zwischen dem Trommelkörper (21) und dem Hüllkreis (36) der Dreschtrommel (5) etwa 1:1,25 beträgt.

10. Mähdrescher der wenigstens ein nach wenigstens einem der Ansprüchen 1 bis 9 ausgestaltete Dreschtrommel (5) aufweist.

11. Mähdrescher nach Anspruch 10, **dadurch gekennzeichnet, dass** der Mähdrescher (1) eine Vorbeschleunigertrommel (37) beinhaltet, welche der Dreschtrommel stromauf vorgeschaltet ist und dieser Erntegut (3) zuführt.

## Claims

1. A threshing drum (5) for combine harvesters of a closed configuration in which mounted on the peripheral surface of a rotatably driven cylindrical drum body (21) over the entire width thereof are a plurality of mutually spaced support profiles (22), to which the beater bars (23) are releasably fixed, and the support profiles (22) are of a U-shaped configuration with flat surfaces (26, 27, 28) on all sides,
**characterised in that**
the angle (γ) at the support profiles (22) for fixing the beater bars (23) is larger than the angle (α) at the underside of the beater bars (23) having an angled fixing surface (24) prior to mounting of the beater bars (23) in the initial condition.

2. A threshing drum according to claim 1 **characterised in that** the support profiles (22) are of an asymmetrical cross-section and the run-on surface (26) is larger than the other individual surfaces (27, 28).

3. A threshing drum according to claim 1 or claim 2 **characterised in that** the run-on surface (26) of the support profiles (22) have a shallow feed angle (β) of about 15° to 45° relative to the peripheral surface of the drum body (21).

4. A threshing drum according to claim 3 **characterised in that** the feed angle (β) is in the region of 22° to 23°.

5. A threshing drum according to at least one of claims 1 to 4 **characterised in that** the beater bars (23) are fixed by means of a plurality of screw connections (29) to the run-on surfaces (26) of the support profiles (22) in such a way that all the inwardly directing fixing surfaces (24) of the beater bars (23) bear against the support profiles (22) over the full surface area and in positively locking relationship under the action of a mounting prestressing.

6. A threshing drum according to at least one of claims 1 to 5 **characterised in that** the drum plates (32) arranged in the interior of the drum body (21) are connected in the peripheral region to the drum body (21) by way of connecting locations (33) in point form and that the respective two edge drum plates (32) are non-rotatably connected to stub shafts (34, 35) whose outer free ends are connected to the shaft bearings and the drive device for the threshing drum (5).

7. A threshing drum according to at least one of claims 1 to 6 **characterised in that** strut means (31) are arranged within the support profiles between the run-on surface (26) and the support surface (28).

8. A threshing drum according to at least one of claims 1 to 7 **characterised in that** the strut means (31) are arranged in the regions of the drum plates (32).

9. A threshing drum according to at least one of claims 1 to 8 **characterised in that** the diameter relationship between the drum body (21) and the envelope circle (36) of the threshing drum (5) is about 1:1.25.

10. A combine harvester which has at least one threshing drum (5) designed in accordance with at least one of claims 1 to 9.

11. A combine harvester according to claim 10 **characterised in that** the combine harvester (1) has a pre-acceleration drum (37) which is disposed upstream of the threshing drum and feeds crop material (3) thereto.

## Revendications

1. Batteur (5) pour moissonneuse-batteuse de conception fermée, dans lequel, à la surface périphérique d'un corps de batteur cylindrique (21) entraîné en rotation, sur toute la largeur de celui-ci, sont montés plusieurs profilés porteurs (22) qui sont disposés à distance les uns des autres et auxquels les battes (23) sont fixées de manière détachable, lesquels profilés porteurs (22) sont conformés en U avec des surfaces (26, 27, 28) planes de tous les côtés, **caractérisé en ce que**, dans l'état initial avant le montage des battes (23), l'angle (γ) sur les profilés porteurs (22) pour la fixation des battes (23) est supérieur à l'angle (α) du côté inférieur des battes (23) à surface de fixation coudée (24).

2. Batteur selon la revendication 1, **caractérisé en ce que** les profilés porteurs (22) présentent une section transversale asymétrique et **en ce que** la surface d'attaque (26) est plus grande que les autres surfaces individuelles (27, 28).

3. Batteur selon les revendications 1 ou 2, **caractérisé en ce que** la surface d'attaque (26) des profilés porteurs (22) présente un angle d'amenée (β) plat d'environ 15° à 45° par rapport à la surface périphérique du corps de batteur (21).

4. Batteur selon la revendication 3, **caractérisé en ce que** l'angle d'amenée (β) se situe dans la plage comprise entre 22° et 23°.

5. Batteur selon au moins une des revendications 1 à 4, **caractérisé en ce que** les battes (23) sont fixées sur les surfaces d'attaque (26) des profilés porteurs (22) au moyen de plusieurs raccords vissés (29), de façon que, sous l'action d'une précontrainte de montage, les surfaces de fixation (24) des battes (23) dirigées vers l'intérieur soient appliquées sur les profilés porteurs (22) par toute leur surface et par complémentarité de formes.

6. Batteur selon au moins une des revendications 1 à 5, **caractérisé en ce que**, dans la zone périphérique au corps de batteur (21), les panneaux de batteur (32) disposés à l'intérieur du corps de batteur (21) sont reliés par des points de liaison ponctuels (33) et **en ce que**, au niveau des bords, les deux panneaux de batteur (32) sont chaque fois liés en rotation avec des bouts d'arbre (34, 35) dont les extrémités libres extérieures sont reliées aux paliers d'arbre et au dispositif d'entraînement du batteur (5).

7. Batteur selon au moins une des revendications 1 à 6, **caractérisé en ce que**, à l'intérieur des profilés porteurs, des entretoises (31) sont disposées entre la surface d'attaque (26) et la surface d'appui (28).

8. Batteur selon au moins une des revendications 1 à 7, **caractérisé en ce que** les entretoises (31) sont disposées au niveau des panneaux de batteur (32).

9. Batteur selon au moins une des revendications 1 à 8, **caractérisé en ce que** le rapport des diamètres entre le corps de batteur (21) et le cercle enveloppe (36) du batteur (5) est d'environ 1:1,25.

10. Moissonneuse-batteuse qui comporte au moins un batteur (5) conformé selon au moins une des revendications 1 à 9.

11. Moissonneuse-batteuse selon la revendication 10, **caractérisée en ce que** la moissonneuse-batteuse (1) contient un tambour pré-accélérateur (37) qui est disposé en amont du batteur et qui amène à celui-ci un produit de récolte (3).
